# EUROPEAN PATENT APPLICATION

(11) **EP 3 553 472 A1**
(43) Date of publication of application: **16.10.2019**
(21) Application number: 18754488.7
(22) Date of filing: 08.02.2018
(51) Int. Cl.: G01C 21/34, G09B 29/10

(54) **DRIVING SUPPORT DEVICE AND COMPUTER PROGRAM**

(30) Priority: 17.02.2017 JP 2017028032
(71) Applicant: Aisin Aw Co., Ltd., Anjo-shi, Aichi 444-1192 (JP); TOYOTA JIDOSHA KABUSHIKI KAISHA, Toyota-shi, Aichi, 471-8571 (JP)
(72) Inventor: TANIZAKI, Daisuke, Anjo-shi, Aichi 444-1192 (JP); JIN, Xin, Toyota-shi, Aichi 471-8571 (JP)
(74) Representative: Cabinet Beau de Loménie
(86) International application number: PCT/JP2018/004387
(87) International publication number: WO 2018/151005

(57) **Abstract**

Provided are a driving support system and a computer program which can provide driving support in view of congestion in each lane even when conventional congestion information that does not include information specifying any congested lane is used. Specifically, congestion information specifying any congested link where there is congestion is obtained. If the congested link is a link with two or more lanes in each direction, there is a branch at the end of the congested link, and links connected to the branch include one or more links where there is congestion and one or more links where there is no congestion, driving support is provided according to the link onto which a vehicle exits at the branch.

## Description

### TECHNICAL FIELD

The present invention relates to driving support systems and computer programs which provide driving support based on congestion information.

### BACKGROUND ART

Conventionally, various information terminals, such as in-vehicle navigation systems, mobile phones, smartphones, tablet computers, and personal computers (hereinafter referred to as navigation systems etc.) can store map information including information about road networks and facilities in various storage devices or obtain the map information by downloading from a server etc. to provide the map information to the users. The navigation systems etc. also provide various kinds of driving support such as: specifying the user's current position by using a current position measurement system such as GPS and showing the user's current position on a map; and calculating a route to a destination set by the user and providing guidance about the route.

The conventional navigation systems etc. also obtain congestion information from an external server, a sensor, etc. and provide the above driving support by using the obtained congestion information. For example, the conventional navigation systems etc. provide guidance about a congested section(s) and the level of congestion thereof, calculate a route that avoids the congested section(s), etc.

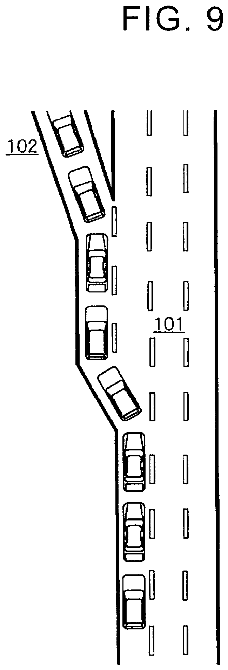

Especially in the case where the road has a plurality of lanes, there is a case where only a specific one(s) of the plurality of lanes is congested. There has been an issue with what kind of driving support to provide in such a case. For example, for a road 101 with three lanes in each direction as shown in FIG. 9, there is a case where only the leftmost lane is congested near a branch point where a ramp (slip road) 102 to a junction is connected to the leftmost lane. In this case, if driving support is provided based on the recognition that the road is congested, the driving support may end up being incorrect as the congestion hardly affects, e.g., vehicles passing straight by the branch point.

As a solution, Japanese Patent Application Publication No. H11-160081 (JP H11-160081 A), for example, discloses that information specifying any congested lane is added to congestion information so that a navigation system can specify each congested lane when receiving the congestion information and so that, in the case where a congested section is displayed with an arrow, guidance about each congested lane is also provided by the type of arrow.

### Related Art Documents

### Patent Documents

Patent Document 1: Japanese Patent Application Publication No. H11-160081 (JP H11-160081 A) (p. 3, FIG. 4)

### SUMMARY OF THE INVENTION

### Problem to be Solved by the Invention

In the technique described in Patent Document 1, however, additional information specifying any congested lane needs to be added to congestion information, and the invention cannot be carried out when the existing congestion information that does not include such additional information is used. For example, an information center such as a Vehicle Information and Communication System (VICS (registered trademark)) center creates congestion information by collecting the current conditions of each road. In order to specify any congested lane, information specifying the road conditions of each lane is required, and it is extremely difficult to collect such detailed information from the roads across the country.

The present invention was developed in order to solve the above conventional problem and it is an object of the present invention to provide a driving support system and a computer program which can provide driving support in view of congestion in each lane even when the conventional congestion information that does not include information specifying any congested lane is used.

### Means for Solving the Problem

In order to achieve the above object, a driving support system according to the present invention includes: congestion information obtaining means for obtaining congestion information specifying any congested link where there is congestion; driving support means for providing driving support based on the congestion information; road shape determining means for determining if the congested link has two or more lanes in each direction and if there is a branch at an end of the congested link; and congestion determining means for, if it is determined that the congested link has two or more lanes in each direction and there is a branch at the end of the congested link, determining if connected links, which are other links connected to the branch, include one or more links where there is congestion and one or more links where there is no congestion, wherein if it is determined that the connected links include one or more links where there is congestion and one or more links where there is no congestion, the driving support means provides driving support according to the link onto which a vehicle exits at the branch.

As used herein, the "congested link where there is congestion" may indicate that there is congestion in the entire link or may indicate that there is congestion in at least a part of sections of the link. The "congested link where there is congestion" includes a link whose level of congestion is equal to or higher than a threshold and a link whose travel time or traffic volume is equal to or higher than a threshold.

A computer program according to the present invention is a program that provides driving support to a moving body such as a vehicle. Specifically, the computer program according to the present invention is a computer program that causes a computer to function as congestion information obtaining means for obtaining congestion information specifying any congested link where there is congestion, driving support means for providing driving support based on the congestion information, road shape determining means for determining if the congested link has two or more lanes in each direction and if there is a branch at an end of the congested link, and congestion determining means for, if it is determined that the congested link has two or more lanes in each direction and there is a branch at the end of the congested link, determining if connected links, which are other links connected to the branch, include one or more links where there is congestion and one or more links where there is no congestion, wherein if it is determined that the connected links include one or more links where there is congestion and one or more links where there is no congestion, the driving support means provides driving support according to the link onto which a vehicle exits at the branch.

### Effects of the Invention

The driving support system and the computer program of the present invention having the above configuration can presume based on the road shape that a situation has occurred where only a part of a plurality of lanes in a congested link is congested, even when congestion information that does not include information specifying any congested lane is used. The driving support system and the computer program of the present invention can thus provide driving support in view of whether the congestion occurring in the congested link actually affects the user or not and can provide driving support that is more suitable for the user.

### BRIEF DESCRIPTION OF THE DRAWINGS

[FIG. 1] FIG. 1 is a block diagram showing the configuration of a navigation system according to an embodiment.
[FIG. 2] FIG. 2 is a diagram showing an example of traffic information.
[FIG. 3] FIG. 3 is a flowchart of a traffic information guidance program according to the embodiment.
[FIG. 4] FIG. 4 is a diagram showing a link to be processed and a branch point.
[FIG. 5] FIG. 5 is a diagram showing a congestion link.
[FIG. 6] FIG. 6 is a flowchart of a route calculation program according to the embodiment.
[FIG. 7] FIG. 7 is a diagram showing a link to be processed and a branch point.
[FIG. 8] FIG. 8 is a diagram showing a congestion link.
[FIG. 9] FIG. 9 is a diagram illustrating a problem of a conventional technique.

### MODES FOR CARRYING OUT THE INVENTION

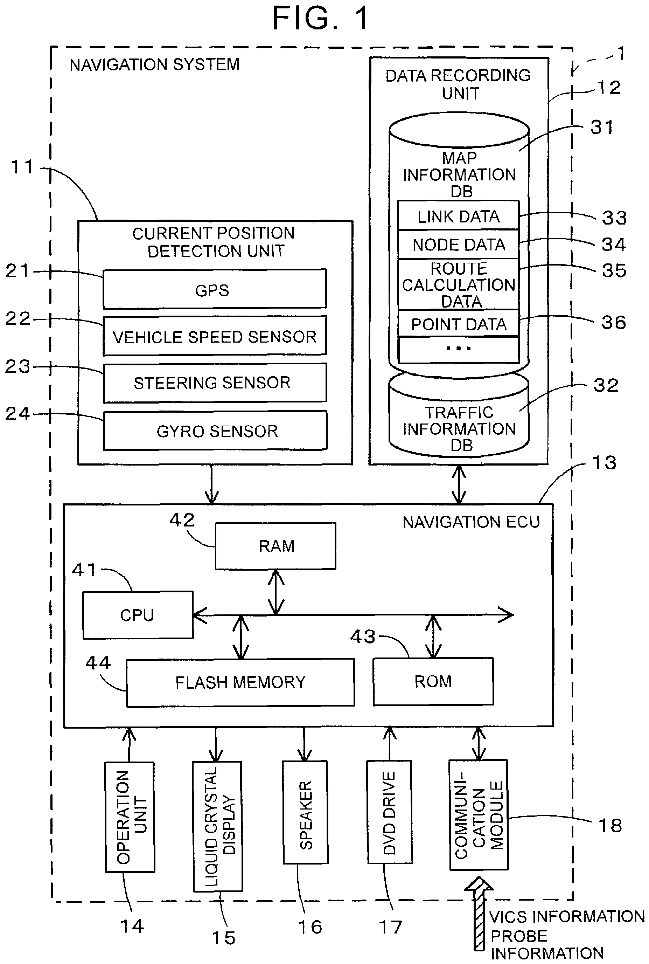

A driving support system according to the present invention will be described in detail below based on an embodiment of a navigation system 1 with reference to the accompanying drawings. First, the general configuration of the navigation system 1 according to the embodiment will be described by using FIG. 1. FIG. 1 is a block diagram of the navigation system 1 according to the embodiment.

As shown in FIG. 1, the navigation system 1 according to the embodiment includes: a current position detection unit 11 that detects the current position of a vehicle equipped with the navigation system 1; a data recording unit 12 having various kinds of data recorded thereon; a navigation ECU 13 that performs various arithmetic operations based on received information; an operation unit 14 that receives user's operations; a liquid crystal display 15 that displays a map around the vehicle and traffic information to the user; a speaker 16 that outputs voice guidance for guidance about the route; a DVD drive 17 that reads a DVD serving as a storage medium; and a communication module 18 that communicates with an information center such as a probe center or a Vehicle Information and Communication System (VICS (registered trademark)) center.

The components of the navigation system 1 will be sequentially described below.

The current position detection unit 11 is comprised of a GPS 21, a vehicle speed sensor 22, a steering sensor 23, a gyro sensor 24, etc. and can detect the current position and bearing of the vehicle, the speed at which the vehicle is moving, the current time, etc. Especially, the vehicle speed sensor 22 is a sensor for detecting the distance traveled by the vehicle and the vehicle speed. The vehicle speed sensor 22 generates pulses according to rotation of drive wheels of the vehicle and outputs pulse signals to the navigation ECU 13. The navigation ECU 13 counts the number of generated pulses to calculate the rotational speed of the drive wheels and the traveled distance. The navigation system 1 need not necessarily include all of these four types of sensors. The navigation system 1 may include only one or more of these four types of sensors.

The data recording unit 12 includes a hard disk (not shown) serving as both an external storage device and a recording medium, and a recording head (not shown) serving as a driver for reading a map information DB 31, a traffic information DB 32, predetermined programs, etc. recorded on the hard disk and writing predetermined data on the hard disk. The data recording unit 12 may have a memory card or an optical disk such as CD or DVD instead of the hard disk. The map information DB 31 and the traffic information DB 32 may be stored in an external server and the navigation system 1 may obtain the map information DB 31 and the traffic information DB 32 by communicating with the external server.

The map information DB 31 is storage means having stored therein, e.g., link data 33 about roads (links), node data 34 about node points, route calculation data 35 that is used for a route calculation process, point data 36 about points such as facilities, map display data for displaying a map, intersection data about intersections, search data for searching for points, etc.

The following data is recorded as the link data 33. For each link forming a road, data indicating the width, direction of travel, gradient, cant, and bank of the road to which the link belongs, the road surface condition, the number of lanes of the road, a location where the number of lanes decreases, a location where the road narrows, a railroad crossing, etc.; for corners, data indicating the radius of curvature, an intersection, a T-junction, the entrance and exit of the corner, etc.; for road attributes, data indicating a downhill road, an uphill road, etc.; and for road types, data indicating a local road such as a national road, a prefectural road, or a narrow street and a toll road such as a national expressway, an urban expressway, a local toll road, or a toll bridge. For the road types, data specifying a slip road (ramp) and a road in a facility, namely a road located on the premises of a facility, is also recorded as the link data 33.

The following data is recorded as the node data 34. Coordinates (positions) of node points that are set at branch points (including intersections, T-junctions, etc.) of actual roads and that are set at predetermined intervals on each road according to the radius of curvature etc.; node attributes indicating whether the node is a node corresponding to an intersection or not etc.; a connected link number list that is a list of link numbers of links connected to the node; an adjacent node number list that is a list of node numbers of nodes each located adjacent to a node with a link therebetween; data about the height (altitude) of each node point, etc.; etc.

Various kinds of data to be used for a route calculation process of calculating a route from a departure point (e.g., the current position of the vehicle) to a set destination as described later is recorded as the route calculation data 35. Specifically, cost calculation data to be used to calculate route calculation cost such as cost indicating a quantified level of appropriateness of a route for each intersection (hereinafter referred to as intersection cost) and cost indicating a quantified level of appropriateness of a route for each link forming a road (hereinafter referred to as link cost) is stored as the route calculation data 35.

Information about each point that can be a departure point, a destination, a point to which the user can be guided, etc. is recorded on the navigation system 1 as the point data 36. For example, the point data 36 is information about facilities including accommodations such as hotels and inns, fueling facilities such as gas stations, commercial facilities such as shopping malls, supermarkets, and shopping centers, amusement facilities such as theme parks and amusement arcades, eating establishments such as restaurants, bars, and pubs, parking facilities such as public parking spaces, traffic facilities such as service areas, parking areas, interchanges, junctions, and roadside rest stops, religious facilities such as temples and churches, and public facilities such as art museums and museums.

The traffic information DB 32 is storage means having stored therein traffic information indicating the traffic conditions obtained from the external VICS center or probe center.

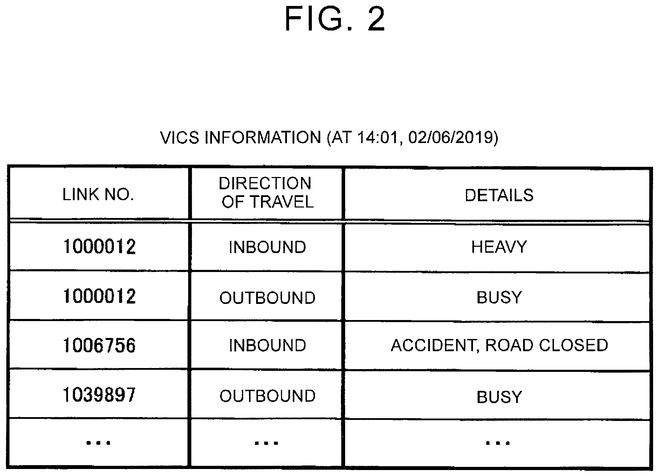

The traffic information that is stored in the traffic information DB 32 is VICS information obtained from the VICS center via communication and probe information obtained from the probe center via communication and, as shown in FIG. 2, is information specifying any section where there is congestion and any section where an accident has occurred, construction is being carried out, etc. at the time the information is obtained. The level of congestion, which indicates how heavy the traffic is, is also obtained for each section where there is congestion. The level of congestion is a parameter that indicates how heavy the traffic is on a plurality of scales and is determined based on the average speed of vehicles moving on the road, which is detected by a sensor etc. installed on the road, and a threshold that is set for each road type. For example, for local roads, the level of congestion of a section where the average speed of vehicles is less than 10 km/h is determined to be "heavy," the level of congestion of a section where the average speed of vehicles is equal to or higher than 10 km/h and less than 20 km/h is determined to be "busy," and the level of congestion of a section where the average speed of vehicles is equal to or higher than 20 km/h is determined to be "light." In the present embodiment, the section whose level of congestion is determined to be "busy" or "heavy" is defined as a congested section where there is congestion, and the section whose level of congestion is determined to be "light" is defined as a section where there is no congestion. Alternatively, only the section whose level of congestion is determined to be "heavy" may be defined as a congested section. The VICS center or the probe center transmits the latest traffic information to the navigation system 1 at predetermined time intervals (e.g., every five minutes).

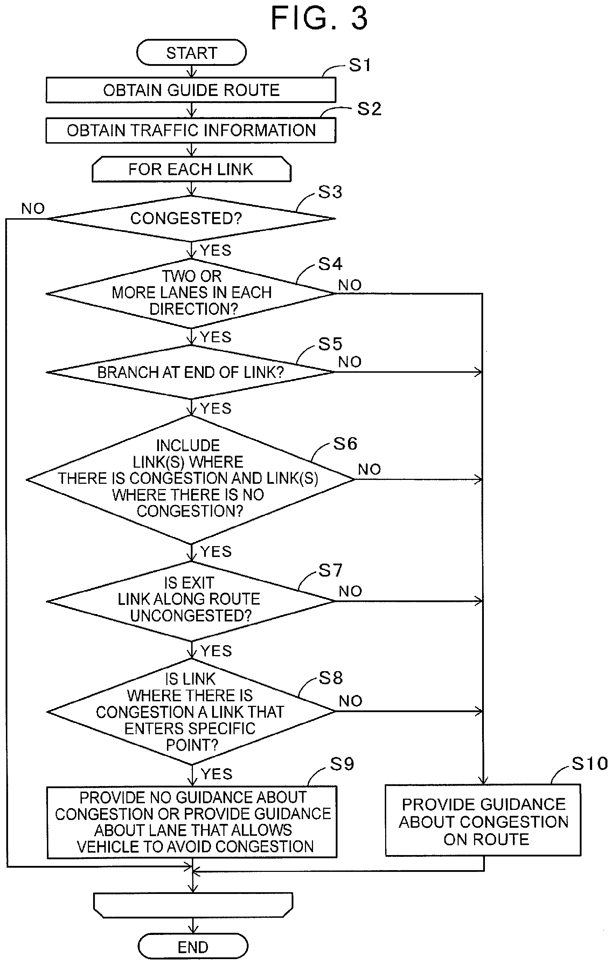

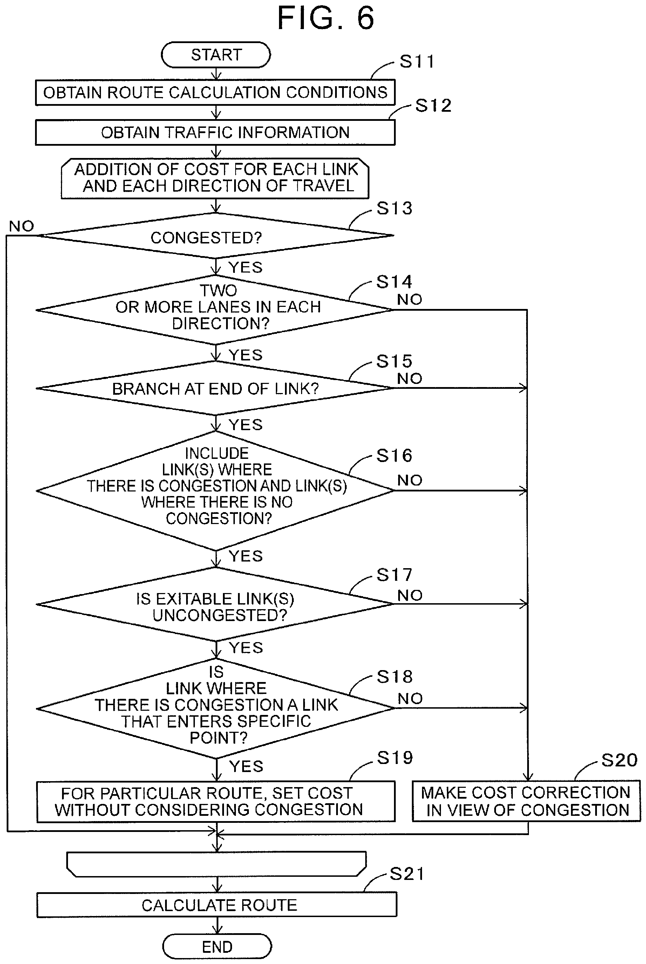

The navigation electronic control unit (ECU) 13 is an electronic control unit that controls the entire navigation system 1. The navigation ECU 13 includes: a CPU 41 serving as an arithmetic unit and a control unit; and internal storage devices such as a RAM 42 that is used as a working memory when the CPU 41 performs various arithmetic operations and that stores route data etc. when a route is calculated, a ROM 43 having recorded thereon a traffic information guidance program (FIG. 3) and a route calculation program (FIG. 6) which will be described below, etc. in addition to a control program, and a flash memory 44 that stores the program read from the ROM 43. The navigation ECU 13 has various means serving as processing algorithms. For example, congestion information obtaining means obtains congestion information specifying any congested link where there is congestion. Driving support means provides driving support based on the congestion information. Road shape determining means determines if the congested link has two or more lanes in each direction and if there is a branch at the end of the congested link. If it is determined that the congested link has two or more lanes in each direction and there is a branch at the end of the congested link, congestion determining means determines if connected links, which are other links connected to the branch, include one or more links where there is congestion and one or more links where there is no congestion.

The operation unit 14 is operated to enter a departure point as a travel start point and a destination as a travel end point etc. and has a plurality of operation switches (not shown) such as various keys and buttons. The navigation ECU 13 performs control so as to execute various corresponding operations based on switch signals that are output in response to depression etc. of the switches. The operation unit 14 may have a touch panel that is provided on the front surface of the liquid crystal display 15. The operation unit 14 may have a microphone and a speech recognition device.

A map image including roads, traffic information, operation guidance, an operation menu, key guidance, a guide route set by the navigation system 1, guidance information about the guide route, news, a weather forecast, time, emails, a TV program, etc. are displayed on the liquid crystal display 15. An HUD or an HMD may be used instead of the liquid crystal display 15.

The speaker 16 outputs voice guidance for driving along the guide route and guidance about traffic information, based on commands from the navigation ECU 13.

The DVD drive 17 is a drive that can read data recorded on a recording medium such as DVD or CD. The DVD drive 17 plays music or videos, updates the map information DB 31, etc. based on the read data. A card slot for reading and writing a memory card may be provided instead of the DVD drive 17.

The communication module 18 is a communication device for receiving traffic information transmitted from the above traffic information center such as, e.g., the VICS center or the probe center. For example, the communication module 18 is a mobile phone or a DCM.

Next, the traffic information guidance program that is executed by the navigation system 1 having the above configuration will be described based on FIG. 3. FIG. 3 is a flowchart of the traffic information guidance program according to the present embodiment. The traffic information guidance program is a program that is executed after an accessory power supply (ACC power supply) of the vehicle is turned on and that provides guidance especially about congestion information out of traffic information. The programs shown in the flowcharts of FIGS. 3 and 6 described below are stored in the RAM 42 or the ROM 43 of the navigation system 1 and are executed by the CPU 41.

In the traffic information guidance program, the CPU 41 obtains, in step (hereinafter abbreviated as S) 1, a guide route currently set by the navigation system 1 as a planned travel route to be taken by the vehicle. The guide route is a recommended route from a departure point to a destination which is set by the navigation system 1, and is calculated by, e.g., Dijkstra's algorithm that is known in the art. The guide route may be calculated by the navigation system 1 or may be calculated by the external server. The departure point may be the user's current position or may be any point selected by the user (e.g., home). For example, the destination is set based on user's operation received by the operation unit 14 (e.g., an operation of reading a registered point or an operation of searching for or selecting a facility). In the case where no guide route is currently set by the navigation system 1, the CPU 41 may obtain a route that is predicted to be taken by the vehicle (e.g., a route running along the current road).

Next, in S2, the CPU 41 reads from the traffic information DB 32 traffic information about the guide route obtained in S1. In the present embodiment, the CPU 41 especially reads congestion information specifying any link where there is congestion (hereinafter also referred to as a congested link) as the traffic information. The link where there is congestion includes not only the case where the entire link is congested but also the case where only a part of sections of the link is congested. For those links which are congested in only a part of their sections, only the links whose end is included in the congested section (i.e., the links that are congested from their intermediate point to their end) may be regarded as congested links to perform the subsequent processes. It is desirable to provide guidance about the location of the congestion and the level of congestion (S10) and make cost correction in view of the congestion (S20) for the links that are congested only in a part of their sections and whose end is not included in the congested section (i.e., the links that are congested from their start point to their intermediate point) as well. The traffic information DB 32 has stored therein traffic information indicating the current traffic conditions obtained from the external VICS center or probe center (see FIG. 2).

The processes of S3 and the subsequent steps described below are performed especially for each of those links about which guidance is to be provided (e.g., the links included in the map image displayed on the liquid crystal display 15) out of the links included in the guide route obtained in S1. The traffic information guidance program is terminated after the processes of S3 and the subsequent steps are performed for all of those links about which guidance is to be provided. The processes of S3 and the subsequent steps may be performed for all of the links included in the guide route.

First, in S3, the CPU 41 determines based on the congestion information obtained in S2 if the link to be processed is a congested link where there is congestion. In the case where the congestion information includes congestion information for each direction of travel (inbound, outbound), the CPU 41 especially determines if the link to be processed is a link where there is congestion in the direction of travel corresponding to the direction in which the vehicle moves.

When determining if the link to be processed is a congested link where there is congestion, it is desirable to use different determination criteria according to the type of traffic information to be used for the determination. That is, in the case where the determination is made based on the traffic information specifying any section where there is congestion, the link that is entirely congested or the link that is congested only in a part of its sections is determined to be a congested link. In the case where the determination is made based on the traffic information specifying not only any section where there is congestion but also the level of congestion, especially the link whose level of congestion is equal to or higher than a threshold (e.g., "busy" or higher in the case where the level of congestion is evaluated on three scales, namely "heavy," "busy," and "light") may be determined to be a congested link. In the case where the determination is made by obtaining the travel time or traffic volume of the link as the traffic information, the link whose travel time or traffic volume is equal to or higher than a threshold may be determined to be a congested link.

If it is determined that the link to be processed is a congested link (S3: YES), the routine proceeds to S4. If it is determined that the link to be processed is not a congested link (S3: NO), the link to be processed is switched to a different link and the process of S3 is performed again.

In S4, the CPU 41 determines by using the link data 33 if the link to be processed is a link with two or more lanes in each direction. The numbers of lanes may be stored in advance for each road included in the map information and whether the link to be processed is a link with two or more lanes in each direction or not may be determined by using the stored numbers of lanes. Alternatively, whether the link to be processed is a link with two or more lanes in each direction or not may be determined based on the road type. Alternatively, in the map information, a flag may be set for each section where the number of lanes of the road is more than one, and whether the link to be processed is a link with two or more lanes in each direction or not may be determined based on the flag.

If it is determined that the link to be processed is a link with two or more lanes in each direction (S4: YES), the routine proceeds to S5. If it is determined that the link to be processed is a link with one lane in each direction (S4: NO), the CPU 41 presumes that the congestion occurring in the link to be processed is congestion that affects the vehicle that moves along the guide route, and the routine proceeds to S10.

In S5, the CPU 41 determines by using the link data 33 if there is a branch point at the end of the link to be processed in the direction in which the vehicle moves. The branch point may refer only to a branch point at a three-way junction or may further include a branch point at a four or more-way junction.

If it is determined that there is a branch point at the end of the link to be processed in the direction in which the vehicle moves (S5: YES), the routine proceeds to S6. If it is determined that there is no branch point at the end of the link to be processed in the direction in which the vehicle moves (S5: NO), the CPU 41 presumes that the congestion occurring in the link to be processed is congestion that affects the vehicle that moves along the guide route, and the routine proceeds to S10.

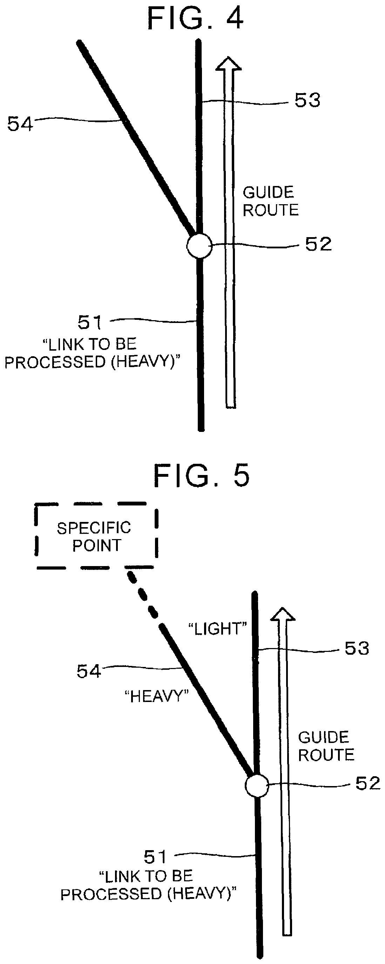

In S6, the CPU 41 determines by using the link data 33 and the congestion information obtained in S2 if other links connected to the branch point located at the end of the link to be processed in the direction in which the vehicle moves (hereinafter referred to as connected links) include one or more links where there is congestion and one or more links where there is no congestion. For example, in the case where there is a branch point 52 of a three-way junction at the end of a link 51 to be processed as shown in FIG. 4, it is determined that the connected links include one or more links where there is congestion and one or more links where there is no congestion, if one of links 53, 54 connected to the branch point 52 is congested and the other link is uncongested. However, in the case where any connected link is a link whose congestion information is not to be provided, it may be determined that there is congestion on this connected link as well, if there is congestion on any link located ahead of, and connected to, this connected link.

If it is determined that the connected links include one or more links where there is congestion and one or more links where there is no congestion (S6: YES), the routine proceeds to S7. If it is determined that the connected links do not include one or more links where there is congestion and one or more links where there is no congestion (S6: NO), the CPU 41 presumes that the congestion occurring in the link to be processed is congestion that affects the vehicle that moves along the guide route, and the routine proceeds to S10.

Subsequently, in S7, the CPU 41 determines if especially the link onto which the vehicle exits (moves) at the branch point (hereinafter referred to as an exit link) out of the connected links is uncongested. For example, in the case where the currently set guide route is the route in which the vehicle exits from the link 51 to be processed onto the link 53 at the branch point 52 as shown in FIG. 4, the link 53 is an exit link. The CPU 41 therefore determines if the link 53 is uncongested.

If it is determined that the exit link is uncongested (S7: YES), the routine proceeds to S8. If it is determined that the exit link is congested (S7: NO), the CPU 41 presumes that the congestion occurring in the link to be processed is congestion that affects the vehicle that moves along the guide route, and the routine proceeds to S10.

In S8, the CPU 41 determines if especially the link where there is congestion (hereinafter referred to as the congestion-occurring link) out of the connected links is a link that enters a specific point. For example, in the case where the currently set guide route is the route in which the vehicle exits from the link 51 to be processed onto the link 53 at the branch point 52 as shown in FIG. 5, and the link 53 is uncongested and there is congestion in the link 54, the CPU 41 determines if the link 54 is a link that enters the specific point. The specific point is any one of a ramp (slip road), a junction, an interchange, a service area, a parking area, a parking lot, and a road in a facility. Even in the case where the congestion-occurring link itself is a ramp, an exit road at a junction or interchange, or a road in a facility, it is determined that the congestion-occurring link is a link that enters the specific point.

If it is determined that the congestion-occurring link is a link that enters the specific point (S8: YES), the routine proceeds to S9. If it is determined that the congestion-occurring link is not a link that enters the specific point (S8: NO), the CPU 41 presumes that the congestion occurring in the link to be processed is congestion that affects the vehicle that moves along the guide route, and the routine proceeds to S10.

In S9, the CPU 41 provides driving support according to the link onto which the vehicle exits at the branch, since there is a route in which the impact of the congestion is very little depending on the direction in which the vehicle exits at the branch. Specifically, the CPU 41 presumes that the congestion in the link to be processed is occurring only in a part of the lanes (the lane(s) located in the direction in which the congestion-occurring link is connected). Accordingly, in the case where the vehicle on the link to be processed reaches the branch point located at the end of the link to be processed and exits at the branch point onto the link where there is no congestion (e.g., in the case where the route in which the vehicle moves in this manner is currently set as a guide route by the navigation system 1 or in the case where no guide route is currently set and the route in which the vehicle moves in this manner is a route along the current road), the CPU 41 presumes that the vehicle can use an uncongested lane and that the congestion therefore does not affect driving along the route. Accordingly, in the case where the vehicle takes this route, the congestion included in the link to be processed is excluded from guidance to be provided, so that no guidance is provided about this congestion. The guidance includes display guidance on the liquid crystal display 15 and voice guidance by the speaker 16. The expression "no guidance is provided about the congestion" includes not only the case where no guidance about the congestion is provided at all but also the case where only a part of the guidance is not provided (e.g., no voice guidance is provided but display guidance is provided).

In S9, guidance may be provided about the lane(s) that allows the vehicle to avoid the congestion included in the link to be processed. Specifically, since it is presumed that the lane located farthest in the direction in which the congestion-occurring link is connected is congested out of the lanes included in the link to be processed, guidance is provided so that the vehicle uses a lane other than the congested lane. For example, in the example of FIG. 6, the link 54, which is the congestion-occurring link, is connected to the left side of the branch point 52. The CPU 41 therefore presumes that only the leftmost lane is congested in the link 51 to be processed, as shown in FIG. 9. Accordingly, guidance "do not use the leftmost lane" or "use the right lane(s)" is provided. The individual lanes of the road may be displayed on the liquid crystal display 15, and a display indicating congestion may be shown on the lane that is presumed to be congested and a display indicating no congestion may be shown on the lane(s) that is presumed to be uncongested. Only one of the guidance about the lane that is presumed to be congested and the guidance about the lane(s) that is presumed to be uncongested may be provided. Instead of the display on the liquid crystal display 15, voice guidance may be output from the speaker 16 so that the user can identify the lane that is presumed to be congested and the lane(s) that is presumed to be uncongested.

In S10, the CPU 41 provides driving support in view of the congestion included in the link to be processed. Specifically, a mark indicating that the link to be processed is congested is superimposed on the map image displayed on the liquid crystal display 15. Guidance about the location of the congestion and the level of congestion may be output by using the speaker 16.

Next, the route calculation program that is executed by the navigation system 1 will be described based on FIG. 6. FIG. 6 is a flowchart of the route calculation program according to the present embodiment. The route calculation program is a program that is executed when the navigation system 1 receives a predetermined operation and that calculates a guide route to a destination.

In the route calculation program, the CPU 41 obtains in S11 a departure point and a destination as route calculation conditions. The departure point may be the current position of the vehicle or may be any point designated by the user (e.g., home). The destination is obtained based on user's operation received by the operation unit 14 (e.g., an operation of searching for or selecting a facility).

Subsequently, in S12, the CPU 41 reads traffic information in the surrounding area from the departure point to the destination from the traffic information DB 32. In the present embodiment, the CPU 41 especially reads as the traffic information congestion information specifying any congested link where there is congestion. The traffic information DB 32 has stored therein traffic information indicating the current traffic conditions obtained from the external VICS center or probe center (see FIG. 2). Details of the traffic information are similar to those described regarding S2.

The following processes of S13 to S20 are performed for each link to (for) which link cost is to be added (calculated) (in the case where separate links are not provided for each direction of travel, these processes are performed for each link and each direction of travel; the same applies to the following description). The routine proceeds to S21 after the processes of S13 to S20 are performed for all of the links to which link cost is to be added. The links to which link cost is to be added are links that can form a recommended route from the departure point to the destination.

First, in S13, the CPU 41 determines based on the congestion information obtained in S12 if the link to be processed is a congested link where there is congestion. How this determination is made is similar to that in S3.

If it is determined that the link to be processed is a congested link (S13: YES), the routine proceeds to S14. If it is determined that the link to be processed is not a congested link (S13: NO), the link to be processed is switched to a different link and the process of S13 is performed again.

In S14, the CPU 41 determines by using the link data 33 if the link to be processed is a link with two or more lanes in each direction. As in S4, the numbers of lanes may be stored in advance for each road included in the map information and whether the link to be processed is a link with two or more lanes in each direction or not may be determined by using the stored numbers of lanes. Alternatively, whether the link to be processed is a link with two or more lanes in each direction or not may be determined based on the road type. Alternatively, in the map information, a flag may be set for each section where the number of lanes of the road is more than one, and whether the link to be processed is a link with two or more lanes in each direction or not may be determined based on the flag.

If it is determined that the link to be processed is a link with two or more lanes in each direction (S14: YES), the routine proceeds to S15. If it is determined that the link to be processed is a link with one lane in each direction (S14: NO), the CPU 41 presumes that the congestion occurring in the link to be processed is congestion that affects the vehicle that moves on this link, and the routine proceeds to S20.

In S15, the CPU 41 determines by using the link data 33 if there is a branch point at the end of the link to be processed in the direction in which the vehicle moves. The branch point may refer only to a branch point at a three-way junction or may further include a branch point at a four or more-way junction.

If it is determined that there is a branch point at the end of the link to be processed in the direction in which the vehicle moves (S15: YES), the routine proceeds to S16. If it is determined that there is no branch point at the end of the link to be processed in the direction in which the vehicle moves (S15: NO), the CPU 41 presumes that the congestion occurring in the link to be processed is congestion that affects the vehicle that moves on this link, and the routine proceeds to S20.

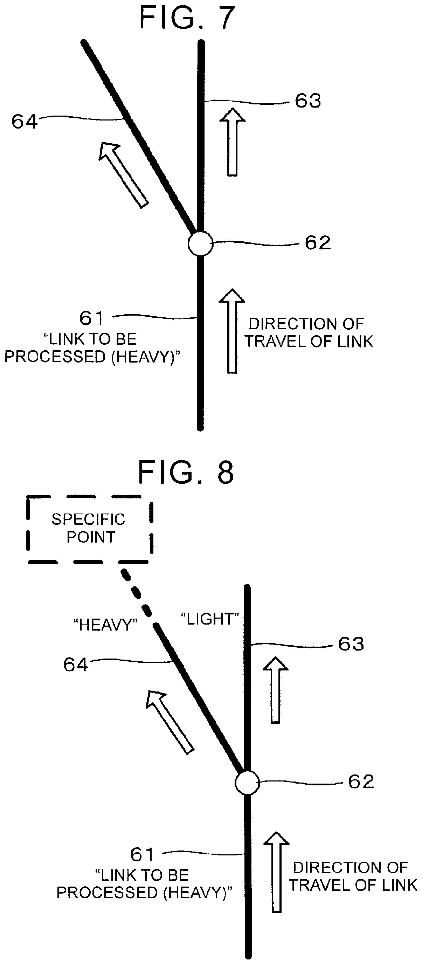

In S16, the CPU 41 determines by using the link data 33 and the congestion information obtained in S12 if other links connected to the branch point located at the end of the link to be processed in the direction in which the vehicle moves, namely connected links, include one or more links where there is congestion and one or more links where there is no congestion. For example, in the case where there is a branch point 62 of a three-way junction at the end of a link 61 to be processed as shown in FIG. 7, it is determined that the connected links include one or more links where there is congestion and one or more links where there is no congestion, if one of links 63, 64 connected to the branch point 62 is congested and the other link is uncongested. However, as in S6, in the case where any connected link is a link whose congestion information is not to be provided, it may be determined that there is congestion on this connected link as well, if there is congestion on any link located ahead of, and connected to, this connected link.

If it is determined that the connected links include one or more links where there is congestion and one or more links where there is no congestion (S16: YES), the routine proceeds to S17. If it is determined that the connected links do not include one or more links where there is congestion and one or more links where there is no congestion (S16: NO), the CPU 41 presumes that the congestion occurring in the link to be processed is congestion that affects the vehicle that moves on this link, and the routine proceeds to S20.

Subsequently, in S17, the CPU 41 determines if the connected links especially include at least one link onto which the vehicle can exit at the branch point (hereinafter referred to as an exitable link) and which is uncongested. For example, in the example shown in FIG. 7, the vehicle that moves on the link 61 can exit onto the link 63 and the link 64 via the branch point 62. The CPU 41 therefore determines if at least one of the links 63, 64 is uncongested.

If it is determined that there is at least one exitable link that is uncongested (S17: YES), the routine proceeds to S18. If it is determined that there is no exitable link that is uncongested (S17: NO), the CPU 41 presumes that the congestion occurring in the link to be processed is congestion that affects the vehicle that moves on this link, and the routine proceeds to S10.

In S18, the CPU 41 determines if especially the link where there is congestion (hereinafter referred to as the congestion-occurring link) out of the connected links is a link that enters a specific point. For example, in the case where, of the links 63, 64 onto which the vehicle can exit from the link 61 to be processed, the link 63 is uncongested but there is congestion in the link 64 as shown in FIG. 8, the CPU determines if the link 64 is a link that enters the specific point. The specific point is any one of a ramp (slip road), a junction, an interchange, a service area, a parking area, a parking lot, and a road in a facility. Even in the case where the congestion-occurring link itself is a ramp, an exit road at a junction or interchange, or a road in a facility, it is determined that the congestion-occurring link is a link that enters the specific point.

If it is determined that the congestion-occurring link is a link that enters the specific point (S18: YES), the routine proceeds to S19. If it is determined that the congestion-occurring link is not a link that enters the specific point (S18: NO), the CPU 41 presumes that the congestion occurring in the link to be processed is congestion that affects the vehicle that moves on this link, and the routine proceeds to S20.

In S19, the CPU 41 provides driving support according to the link onto which the vehicle exits at the branch, since there is a route in which the impact of the congestion is very little depending on the direction in which the vehicle exits at the branch. Specifically, for the route in which the vehicle on the link to be processed reaches the branch point located at the end of the link to be processed and exits at the branch point onto the link where there is no congestion (that is, in the example shown in FIG. 8, the route in which the vehicle moves from the link 61 onto the link 63), the CPU 41 presumes that only a part of the lanes (the lane located farthest in the direction in which the congestion-occurring link is connected) is congested and the vehicle can therefore use an uncongested lane and thus presumes that the congestion does not affect driving along the route. Accordingly, for this route, the CPU 41 adds cost without making cost correction (changing cost) for the congestion in the link to be processed. For example, the CPU 41 calculates cost from the link length, the road type, the number of lanes, etc. and adds the calculated cost to the link to be processed. The CPU 41 may presume that the congestion more or less affects driving along the route and may increase the cost. In this case, it is desirable that the increase in cost be smaller than in the case where the vehicle exits onto the link where there is congestion as described below. For example, the cost value is corrected to 1.1 times.

In S19, for the route in which the vehicle on the link to be processed reaches the branch point located at the end of the link to be processed and exits at the branch point onto the link where there is congestion (that is, in the example shown in FIG. 8, the route in which the vehicle moves from the link 61 onto the link 64), the CPU 41 presumes that the vehicle has to use the congested lane and that the congestion affects driving along the route. Accordingly, the CPU 41 provides driving support in view of the congestion included in the link to be processed. Specifically, the CPU 41 makes cost correction (changes cost) for the congestion in the link to be processed and adds the resultant cost. For example, in the case where the level of congestion is "busy," the cost value is corrected to 1.5 times. In the case where the level of congestion is "heavy," the cost value is doubled. As described above, in S19, even if the link is the same, different cost values are added depending on the direction in which the vehicle exits at the branch point.

In S20, the CPU 41 presumes that the vehicle has to use the congested lane and that the congestion affects driving along the route, regardless of the direction in which the vehicle exits at the branch point located at the end of the link to be processed. Accordingly, the CPU 41 provides driving support in view of the congestion included in the link to be processed. Specifically, the CPU 41 makes cost correction (changes cost) for the congestion in the link to be processed and adds the resultant cost. For example, in the case where the level of congestion is "busy," the cost value is corrected to 1.5 times. In the case where the level of congestion is "heavy," the cost value is doubled.

Subsequently, in S21, the CPU 41 calculates, in addition to the link cost added to each link in S13 to S20, intersection cost indicating a quantified level of appropriateness of a route for each intersection (node), expense cost indicating a quantified level of expenses required for driving, etc. and calculates a recommended route by using each calculated route calculation cost. Specifically, a route with the smallest sum of cost values is calculated as a recommended route by using Dijkstra's algorithm that is known in the art. In addition to the recommended route, the CPU 41 may calculate other candidate routes under different route calculation conditions (e.g., routes calculated based on the following preferences: shortest route, avoid highways and toll roads, and use toll roads). The CPU 41 then sets the calculated recommended route as a guide route of the navigation system 1 and provides driving guidance for the vehicle based on the set guide route. That is, the driving support means of the present invention includes providing driving guidance based on the calculated route in addition to performing route calculation for calculating a route to a destination.

As described in detail above, in the navigation system 1 and the computer program that is executed by the navigation system 1 according to the present embodiment, congestion information specifying any congested link where there is congestion is obtained (S2, S12). If the congested link is a link with two or more lanes in each direction (S4, S14), there is a branch at the end of the congested link (S5, S15), and links connected to the branch include one or more links where there is congestion and one or more links where there is no congestion (S6, S16), driving support is provided according to the link onto which the vehicle exits at the branch (S9, S19). Accordingly, even when congestion information that does not include information specifying any congested lane is used, it can be presumed based on the road shape that a situation has occurred where only a part of a plurality of lanes of the congested link is congested. As a result, driving support can be provided in view of whether the congestion occurring in the congested link actually affects the user or not, and driving support that is more suitable for the user can be provided.

It should be understood that the present invention is not limited to the above embodiment and various improvements and modifications can be made without departing from the spirit and scope of the present invention.

For example, in the present embodiment, driving support includes providing guidance about traffic information and performing calculation of a recommended route. However, the present invention is also applicable to other types of driving support. For example, the present invention is also applicable to autonomous driving support in which at least a part of driving maneuvers of a vehicle is performed by autonomous control. For example, in the case where the present invention is applied to autonomous driving support, the route calculation program (FIG. 6) may be executed to calculate a travel route by autonomous driving support. Alternatively, the traffic information guidance program (FIG. 3) may be performed to determine the lane to be used by the vehicle by autonomous driving support, and the vehicle may be controlled to use the lane that allows the vehicle to avoid the congestion in S9.

In the present embodiment, the road types of the congested link and the connected links are not considered. However, the road types may be considered. For example, in the case where the congested link is a main road, the connected link where there is congestion is a link onto which the vehicle exits from the main road, and the connected link where there is no congestion is a main road that is continuous with the main road, the above driving support according to the link onto which the vehicle exits at the branch (FIGS. 3, 6) may be provided.

For example, in the present embodiment, the specific point, which is the condition for determination in S8 and S18, is any one of a ramp (slip road), a junction, an interchange, a service area, a parking area, a parking lot, and a road in a facility. However, the specific point may be any other point that can cause congestion.

The present invention is also applicable to various devices having a function to provide guidance about traffic information or a route calculation function, in addition to the navigation system. For example, the present invention is applicable to mobile phones, smartphones, tablet computers, personal computers, etc. (hereinafter referred to as a "mobile terminal etc."). The present invention is also applicable to systems formed by a server and a mobile terminal etc. In this case, each step of the traffic information guidance program (FIG. 3) and the route calculation program (FIG. 6) described above may be performed by either the server or the mobile terminal etc.

Although the embodiment of the driving support system according to the present invention is described above, the traffic information guidance device may have the following configurations. In this case, the driving support system has the following effects.

For example, a first configuration is as follows.

The driving support system includes: congestion information obtaining means (41) for obtaining congestion information specifying any congested link where there is congestion; driving support means (41) for providing driving support based on the congestion information; road shape determining means (41) for determining if the congested link has two or more lanes in each direction and if there is a branch at an end of the congested link; and congestion determining means (41) for, if it is determined that the congested link has two or more lanes in each direction and there is a branch at the end of the congested link, determining if connected links, which are other links connected to the branch, include one or more links where there is congestion and one or more links where there is no congestion. In the driving support system, if it is determined that the connected links include one or more links where there is congestion and one or more links where there is no congestion, the driving support means provides driving support according to the link onto which a vehicle exits at the branch.

According to the driving support system having the above configuration, even when congestion information that does not include information specifying any congested lane is used, the driving support system can presume based on the road shape that a situation has occurred where only a part of the plurality of lanes of the congested link is congested. As a result, the driving support system can provide driving support in view of whether the congestion occurring in the congested link actually affects the user or not and can thus provide driving support that is more suitable for the user.

A second configuration is as follows.

In the case where the congested link is a main road, the connected link where there is congestion is a link onto which the vehicle exits from the main road, and the connected link where there is no congestion is a main road that is continuous with the main road, the driving support means provides driving support according to the link onto which the vehicle exits at the branch.

According to the driving support system having the above configuration, in the case where there is congestion in the link onto which the vehicle exits from the main road, the driving support system can presume that a situation has occurred where only a part of the plurality of lanes of the main road is congested and can provide suitable driving support according to the link onto which the vehicle exits at the branch point.

A third configuration is as follows.

The link onto which the vehicle exits from the main road is a link that enters a specific point.

According to the driving support system having the above configuration, in the case where there is congestion in the link onto which the vehicle exits from the main road to get to the specific point, the driving support system can presume that a situation has occurred where only a part of the plurality of lanes of the main road is congested and can provide suitable driving support according to the link onto which the vehicle exits at the branch point.

A fourth configuration is as follows.

The specific point is any one of a ramp, a junction, an interchange, a service area, a parking area, and a parking lot.

According to the driving support system having the above configuration, in the case where there is congestion on the link onto which the vehicle exits from the main road to get to a ramp, a junction, an interchange, a service area, a parking area, a parking lot, etc. which particularly tends to cause congestion, the driving support system can presume that a situation has occurred where only a part of the plurality of lanes of the main road is congested and can provide suitable driving support according to the link onto which the vehicle exits at the branch point.

A fifth configuration is as follows.

The link onto which the vehicle exits from the main road is any one of a ramp, an exit road at a junction or interchange, and a road in a facility.

According to the driving support system having the above configuration, in the case where there is congestion on a ramp, an exit road at a junction or interchange, a road in a facility, etc. which particularly tends to cause congestion, the driving support system can presume that a situation has occurred where only a part of the plurality of lanes of the main road is congested and can provide suitable driving support according to the link onto which the vehicle exits at the branch point.

A sixth configuration is as follows.

The driving support includes providing guidance about the congestion in the link, and in the case where the vehicle exits at the branch onto the link where there is no congestion, the driving support means (41) does not provide guidance about the congestion in the congested link or provides guidance about the lane that allows the vehicle to avoid the congestion in the congested link.

According to the driving support system having the above configuration, guidance about the congestion that does not affect the user can be prevented from being provided. The driving support system can thus provide guidance about traffic information which is more suitable for the user. By providing guidance about the lane for driving that is not affected by the congestion, the driving support system can provide driving support so that the user can drive without being affected by the congestion.

A seventh configuration is as follows.

The driving support means provides guidance identifying the lane that is presumed to be congested and the lane that is presumed to be uncongested in the congested link.

According to the driving support system having the above configuration, since the driving support system provides guidance identifying the lane that is not affected by the congestion and the lane that is affected by the congestion to the user, the driving support system can provide driving support so that the user can drive without being affected by the congestion.

An eighth configuration is as follows.

The driving support includes performing route calculation for calculating a route to a destination, and in the case where the vehicle exits at the branch onto the link where there is no congestion, the driving support means (41) calculates the route without changing cost based on the congestion in the congested link.

According to the driving support system having the above configuration, a route corrected so that the user is less likely to drive through the congestion that does not affect him or her can be prevented from being calculated especially in the case where the process of calculating a route to a destination is performed. The driving support system can thus provide a recommended route that is more suitable for the user.

A ninth configuration is as follows.

The driving support includes performing route calculation for calculating a route to a destination, and in the case where the vehicle exits at the branch onto the link where there is no congestion, the driving support means (41) calculates the route by changing cost based on the congestion in the congested link by a smaller amount than in the case where the vehicle exits at the branch onto the link where there is congestion.

According to the driving support system having the above configuration, a route corrected so that the user is less likely to drive through the congestion that does not affect him or her can be prevented from being calculated especially in the case where the process of calculating a route to a destination is performed. The driving support system can thus provide a recommended route that is more suitable for the user.

### Description of the Reference Numerals

- 1: Navigation System
- 15: Liquid Crystal Display
- 16: Speaker
- 31: Map Information DB
- 32: Traffic Information DB
- 41: CPU
- 42: RAM
- 43: ROM

## Claims

1. A driving support system, comprising:
congestion information obtaining means for obtaining congestion information specifying any congested link where there is congestion;
driving support means for providing driving support based on the congestion information;
road shape determining means for determining if the congested link has two or more lanes in each direction and if there is a branch at an end of the congested link; and
congestion determining means for, if it is determined that the congested link has two or more lanes in each direction and there is a branch at the end of the congested link, determining if connected links, which are other links connected to the branch, include one or more links where there is congestion and one or more links where there is no congestion, wherein
if it is determined that the connected links include one or more links where there is congestion and one or more links where there is no congestion, the driving support means provides driving support according to the link onto which a vehicle exits at the branch.

2. The driving support system according to claim 1, wherein
in the case where the congested link is a main road, the connected link where there is congestion is a link onto which the vehicle exits from the main road, and the connected link where there is no congestion is a main road that is continuous with the main road, the driving support means provides driving support according to the link onto which the vehicle exits at the branch.

3. The driving support system according to claim 2, wherein
the link onto which the vehicle exits from the main road is a link that enters a specific point.

4. The driving support system according to claim 3, wherein
the specific point is any one of a ramp, a junction, an interchange, a service area, a parking area, and a parking lot.

5. The driving support system according to claim 2, wherein
the link onto which the vehicle exits from the main road is any one of a ramp, an exit road at a junction or interchange, and a road in a facility.

6. The driving support system according to any one of claims 1 to 5, wherein
the driving support includes providing guidance about the congestion in the link, and
in the case where the vehicle exits at the branch onto the link where there is no congestion, the driving support means does not provide guidance about the congestion in the congested link or provides guidance about the lane that allows the vehicle to avoid the congestion in the congested link.

7. The driving support system according to claim 6, wherein
the driving support means provides guidance identifying the lane that is presumed to be congested and the lane that is presumed to be uncongested in the congested link.

8. The driving support system according to any one of claims 1 to 5, wherein
the driving support includes performing route calculation for calculating a route to a destination, and
in the case where the vehicle exits at the branch onto the link where there is no congestion, the driving support means calculates the route without changing cost based on the congestion in the congested link.

9. The driving support system according to any one of claims 1 to 5, wherein
the driving support includes performing route calculation for calculating a route to a destination, and
in the case where the vehicle exits at the branch onto the link where there is no congestion, the driving support means calculates the route by changing cost based on the congestion in the congested link by a smaller amount than in the case where the vehicle exits at the branch onto the link where there is congestion.

10. A computer program that causes a computer to function as congestion information obtaining means for obtaining congestion information specifying any congested link where there is congestion, driving support means for providing driving support based on the congestion information, road shape determining means for determining if the congested link has two or more lanes in each direction and if there is a branch at an end of the congested link, and congestion determining means for, if it is determined that the congested link has two or more lanes in each direction and there is a branch at the end of the congested link, determining if connected links, which are other links connected to the branch, include one or more links where there is congestion and one or more links where there is no congestion, wherein
if it is determined that the connected links include one or more links where there is congestion and one or more links where there is no congestion, the driving support means provides driving support according to the link onto which a vehicle exits at the branch.
